# EUROPÄISCHE PATENTSCHRIFT

(11) **EP 1 348 514 B1**
(45) Veröffentlichungstag und Bekanntmachung des Hinweises auf die Patenterteilung: **13.05.2009**
(21) Anmeldenummer: 03004605.6
(22) Anmeldetag: 01.03.2003
(51) Int. Cl.: B23Q 1/01, B23Q 1/58, B23Q 1/26, F16C 29/00

(54) **Schlittensystem**
Carriage system
Système de chariot

(30) Priorität: 15.03.2002 DE 10212343
(43) Veröffentlichungstag der Anmeldung: 01.10.2003
(73) Patentinhaber: Traub Drehmaschinen GmbH & Co. KG, 73262 Reichenbach (DE)
(72) Erfinder: Baumann, Ulrich, 73252 Lenningen (DE)
(74) Vertreter: Beck, Jürgen

(56) Entgegenhaltungen:
- WO-A-93/19915
- DE-A- 19 934 754
- DE-C- 410 022
- US-A- 5 501 528
- US-B1- 6 227 708

## Beschreibung

Die Erfindung betrifft ein Schlittensystem für Werkzeugmaschinen nach dem Oberbegriff von Anspruch 1. Aus der DE 410022 C ist ein solches Schlittensystem bekannt.

Der Erfindung liegt die Aufgabe zugrunde, ein Schlittensystem der gattungsgemäßen Art derart zu verbessern, dass die Führungsschienen mit möglichst hoher Präzision und möglichst einfach montierbar sind.

Diese Aufgabe wird bei einem Schlittensystem der eingangs beschriebenen Art erfindungsgemäß dadurch gelöst, dass das Spannelement auf einander gegenüberliegenden Längsseiten mit Druckflächen zum Beaufschlagen jeweils eines Einsatzkörpers versehen ist.

Der Vorteil der erfindungsgemäßen Lösung ist darin zu sehen, dass mit dieser in einfacher Weise die Ausrichtung der Längsrichtung der Führungsschiene vorgebbar ist und durch die Aufnahme, das Spannelement und den Einsatzkörper außerdem eine stabile und präzise Fixierung der Führungsschiene in allen quer zur Längsrichtung verlaufenden Richtungen möglich ist.

Ein weiterer Vorteil der vorliegenden Erfindung ist darin zu sehen, dass bei einem lösbar ausgebildeten Spannelement in einfacher Weise ein Auswechseln der Führungsschiene möglich ist.

Zur präzisen Ausrichtung der Führungsschiene ist es besonders günstig, wenn die Aufnahme mindestens eine Ausrichtfläche aufweist, an welcher eine zugeordnete Montagefläche des Einsatzkörpers anliegt.

Noch besser ist es, wenn die Aufnahme zwei Ausrichtflächen aufweist, an welchen jeweils eine zugeordnete Montagefläche des Einsatzkörpers anliegt.

Die Ausrichtflächen in der Aufnahme können beliebig zueinander angeordnet sein. Eine besonders günstige Lösung sieht jedoch vor, dass in der Aufnahme die zwei Ausrichtflächen einander zugewandt angeordnet sind.

Um eine präzise Ausrichtung des Einsatzkörpers beim Einsetzen in die Aufnahme zu erreichen ist vorzugsweise vorgesehen, dass die Ausrichtfläche und die zugeordnete Montagefläche des Einsatzkörpers eine Flächenpaarung bilden und dass mindestens eine Fläche der Flächenpaarung als ebene Fläche ausgebildet ist.

Eine weitere Steigerung der Präzision der Ausrichtung lässt sich dadurch erreichen, dass jede Ausrichtfläche und die zugeordnete Montagefläche des Einsatzkörpers eine Flächenpaarung bilden und dass mindestens eine Fläche jeder Flächenpaarung als ebene Fläche ausgebildet ist.

Eine besonders hohe Präzision verbunden mit dauerhafter Stabilität lässt sich dann erreichen, wenn beide Flächen einer Flächenpaarung als ebene und somit flächenhaft aneinanderliegende Flächen ausgebildet sind.

Alternativ zum Vorsehen ebener Flächen, ist es auch denkbar, leicht gekrümmte Flächen einzusetzen. Derartige Flächen sind zwar aufwendiger herzustellen, geben jedoch die Möglichkeit, unter einer Kraftwirkung auftretende Verformungen zu berücksichtigen und durch die Krümmung vorab zu berücksichtigen, so dass beispielsweise bei der Krafteinwirkung dann die gewünschte Flächenform, zum Beispiel dann eine eben Fläche vorliegt.

Hinsichtlich der Ausrichtung der Flächen unterschiedlicher Flächenpaarungen relativ zueinander wurden bislang keine näheren Angaben gemacht.

Beispielsweise wäre es denkbar, die Flächen unterschiedlicher Flächenpaarungen in einem stumpfen Winkel relativ zueinander anzuordnen.

Eine besonders günstige Lösung sieht jedoch vor, dass die Flächen von unterschiedlichen Flächenpaarungen in einem Winkel von weniger als 90° zueinander verlaufen.

Insbesondere um ein sattes Anlegen der Flächen aneinander zu erreichen, ist vorzugsweise vorgesehen, dass die Winkel zwischen den Flächen unterschiedlicher Flächenpaarungen größer als der Grenzwinkel der Selbsthemmung sind, so dass beim Einsetzen des Einsatzteils in die Aufnahme die Flächen ohne Behinderung durch die Selbsthemmung aneinander zur Anlage kommen.

Besonders günstig ist es, wenn die ebenen Flächen der unterschiedlichen Flächenpaarungen in einem Winkel im Bereich zwischen 30° und 60° zueinander verlaufen.

Um ein präzises Erreichen der Endposition der Führungsschiene beim Einsetzen des Einsatzteils in die Aufnahme zu erreichen, ist vorzugsweise vorgesehen, dass die Flächenpaarungen durch relativ zueinander gleitende Flächen gebildet sind.

Besonders günstig ist es, wenn die Flächenpaarungen jeweils durch geschliffene Flächen gebildet sind.

Hinsichtlich der Ausbildung des Fußbereichs selbst wurden im Zusammenhang mit der bisherigen Erläuterung der einzelnen Ausführungsbeispiele keine näheren Angaben gemacht. So sieht eine für eine möglichst stabile Fixierung der Führungsschiene vorteilhafte Lösung vor, dass der Fußbereich symmetrisch zu einer Längsmittelebene der Führungsschiene ausgebildet ist.

Vorzugsweise ist ebenfalls der Führungsbereich symmetrisch zur Längsmittelebene der Führungsschiene ausgebildet.

Besonders günstig lässt sich eine derartige Führungsschiene dann herstellen, wenn der Fußbereich und der Führungsbereich der Führungsschiene Teil einer einstückigen, sich in der Längsrichtung erstreckenden Profilschiene sind.

Die Profilschiene könnte dabei nach wie vor noch wechselnde Querschnittsformen aufweisen.

Eine besonders günstige Herstellung ist dann möglich, wenn die Profilschiene in der Längsrichtung eine im Wesentlichen konstante Querschnittsform aufweist.

Eine besonders vorteilhafte Ausführungsform der erfindungsgemäßen Lösung sieht vor, dass das Spannelement ständig mit Spannkraft auf den Einsatzkörper einwirkt, so dass der Einsatzkörper insgesamt ständig durch Spannkräfte eingespannt ist.

Prinzipiell wäre es denkbar, den Einsatzkörper der Führungsschiene an mehreren einzelnen Stellen einzuspannen. Die erfindungsgemäße Lösung ist jedoch besonders vorteilhaft, wenn mindestens ein Spannelement über die Länge der Führungsschiene vielfach mit der Spannkraft auf den Einsatzkörper einwirkt.

Vorzugsweise ist dabei vorgesehen, dass die Vielfacheinwirkung der Spannkraft dazu führt, dass die in Längsrichtung der Führungsschiene sich erstreckenden Bereiche, in denen die Spannkraft einwirkt, in Summe eine größere Erstreckung aufweisen als die Bereich, in denen keine Spannkraft einwirkt.

Besonders günstig ist es, um eine präzise Ausrichtung der Führungsschiene zu erhalten, wenn mit dem Spannelement auf den Einsatzkörper wirkende Spannkräfte einstellbar sind.

Damit besteht die Möglichkeit von außerhalb der Führungsschiene die Spannkraft einzustellen und auch nachzustellen. Ferner ist dies in gleicher Weise auch bei einem Austausch der Führungsschiene realisierbar.

Vorzugsweise sind dabei die Spannelemente selbst in ihrer Wirkung einstellbar ausgebildet, das heißt beispielsweise relativ zum Grundkörper einstellbar um dann mit einer einstellbaren Spannkraft auf den Einsatzkörper zu wirken.

Noch günstiger ist es sogar, wenn die Spannkräfte lokal einstellbar sind.

Prinzipiell wäre es auch bei dem erfindungsgemäßen Spannelement oder den erfindungsgemäßen Spannelementen denkbar, dass diese die Führungsschiene oder Teile der Führungsschiene durchdringen.

Besonders günstig ist es jedoch, insbesondere im Hinblick auf eine rationelle Anfertigung der Führungsschiene, wenn das Spannelement oder die Spannelemente durchdringungsfrei zur Führungsschiene angeordnet sind.

Eine besonders zweckmäßige Anordnung von Spannelement und Einsatzkörper sieht vor, dass das Spannelement von einer der Aufnahme gegenüberliegenden Seite auf den Einsatzkörper einwirkt.

Hinsichtlich der Ausbildung des Spannelements wurden bislang keine näheren Angaben gemacht. So könnte beispielsweise das Spannelement zwischen Grundkörper und Führungsschiene wirksam sein und somit nur indirekt auf das Einsatzteil oder die Aufnahme einwirken.

Eine besonders günstige Lösung sieht jedoch vor, dass das Spannelement direkt auf den Einsatzkörper einwirkt und somit eine möglichst präzise Fixierung des Einsatzteils bewirkt.

Um die Kraft, die über das Spannelement einzuleiten ist, möglichst gleichmäßig einleiten zu können, ist vorzugsweise vorgesehen, dass das Spannelement flächig an dem Einsatzkörper anliegt.

Ferner können - wie bereits erwähnt - über die Länge der Führungsschiene gesehen eine Vielzahl von Spannelementen wirksam sein. Eine besonders günstige Lösung sieht jedoch vor, dass das Spannelement als Spannleiste ausgebildet ist, welche sich vorzugsweise im Wesentlichen über die Länge der Führungsschiene erstreckt. Mit dieser Lösung ist eine möglichst gleichmäßige Krafteinleitung mittels des Spannelements realisierbar.

Zweckmäßigerweise erfolgt die Einwirkung des erfindungsgemäßen Spannelements auf das zu beaufschlagende Teil mittels mindestens einer Druckfläche. Es können mehrere gleichzeitig wirksame Druckflächen an dem Spannelement vorgesehen sein. Besonders günstig ist es jedoch, wenn sich eine Druckfläche über die Ausdehnung des Spannelements in ihrer Längsrichtung erstreckt.

Besonders günstig ist es, wenn die Druckflächen ein und desselben Spannelements Einsatzkörper unterschiedlicher, benachbarter Führungsschienen beaufschlagen, so dass durch ein einziges Spannelement zwei Führungsschienen in der entsprechenden Aufnahme fixierbar sind.

Hinsichtlich der Ausbildung des Einsatzkörpers und der Aufnahme an Grundkörper und Führungsschiene wurden bislang keine näheren Angaben gemacht.

Eine Möglichkeit ist, den Grundkörper mit einem Einsatzkörper zu versehen, welcher in eine im Fußbereich der Führungsschiene vorgesehene Aufnahme eingreift.

Eine besonders vorteilhafte Lösung sieht vor, dass der Fußbereich der Führungsschiene als Einsatzkörper ausgebildet ist und der Grundkörper die Aufnahme aufweist. Damit lässt sich in besonders einfacher Weise eine geeignete Verbindung zwischen dem Grundkörper und der Führungsschiene realisieren.

Eine besonders zweckmäßige Ausbildung eines ein Einsatzteil darstellenden Fußbereichs einer Führungsschiene sieht vor, dass der Fußbereich mindestens drei parallel zur der Längsrichtung der Führungsschiene erstreckende Montageflächen aufweist, von denen jede sich in Richtung quer zur Längsrichtung parallel zu jeweils einem anderen Schenkel eines in einer quer zur Längsrichtung verlaufenden Ebene liegenden Dreiecks erstreckt.

Mit derartigen, längs den Schenkeln eines Dreiecks angeordneten Montageflächen lässt sich die erfindungsgemäße Lösung in besonders günstiger Weise realisieren.

Vorzugsweise sind dabei die Montageflächen so angeordnet, dass eine der Montageflächen auf einer dem Führungsbereich gegenüberliegenden Seite des Fußbereichs verläuft.

Ferner sind die weiteren Montageflächen an dem Fußbereich so angeordnet, dass diese auf unterschiedlichen Seiten der dem Führungsbereich gegenüberliegenden Montagefläche verlaufen.

Eine besonders günstige Lösung sieht dabei vor, dass das die Lage der Montageflächen quer zur Längsrichtung definierende Dreieck ein gleichschenkliges Dreieck ist.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:
- Fig. 1: eine perspektivische Darstellung eines Ausführungsbeispiels erfindungsgemäßen Schlittensystems mit zwei Schlitten;
- Fig. 2: eine vergrößerte Darstellung des Bereichs A in Fig. 1, der nicht der Erfindung entspricht
- Fig. 3: eine vergrößerte Darstellung des Bereichs B in Fig. 1 und
- Fig. 4: eine Darstellung ähnlich Fig. 2 eines nicht erfindungsgemäßen Ausführungsbeispiels.

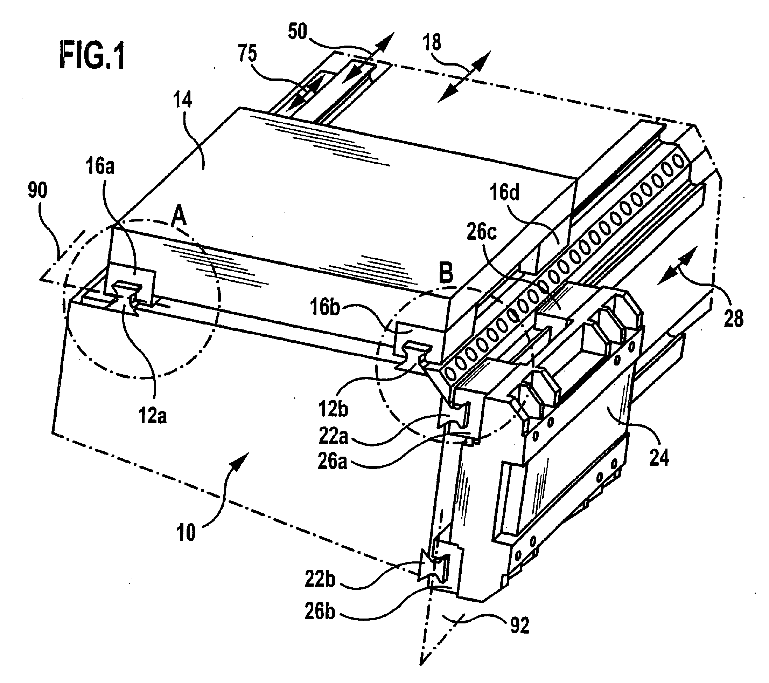

Ein in Fig. 1 dargestelltes Ausführungsbeispiels eines erfindungsgemäßen Schlittensystems umfasst einen Grundkörper 10, an welchem beispielsweise zwei Führungsschienen 12a und 12b für einen ersten Schlitten 14 vorgesehen sind, wobei der erste Schlitten 14 mit Führungswagen 16a, 16b und 16d versehen ist, die an den Führungsschienen 12a und 12b in einer Führungsrichtung 18 geführt sind, während die Führungswagen 16a, 16b und 16d fest mit dem Schlitten verbunden sind.

In gleicher Weise sind am Grundkörper 10 Führungsschienen 22a und 22b für einen als Ganzes mit 24 bezeichneten zweiten Schlitten vorgesehen, der seinerseits mit Führungswagen 26a, 26b und 26c versehen ist, die an den Führungsschienen 22a und 22b in der Führungsrichtung 28 ebenfalls geführt sind und fest mit dem zweiten Schlitten 24 verbunden sind.

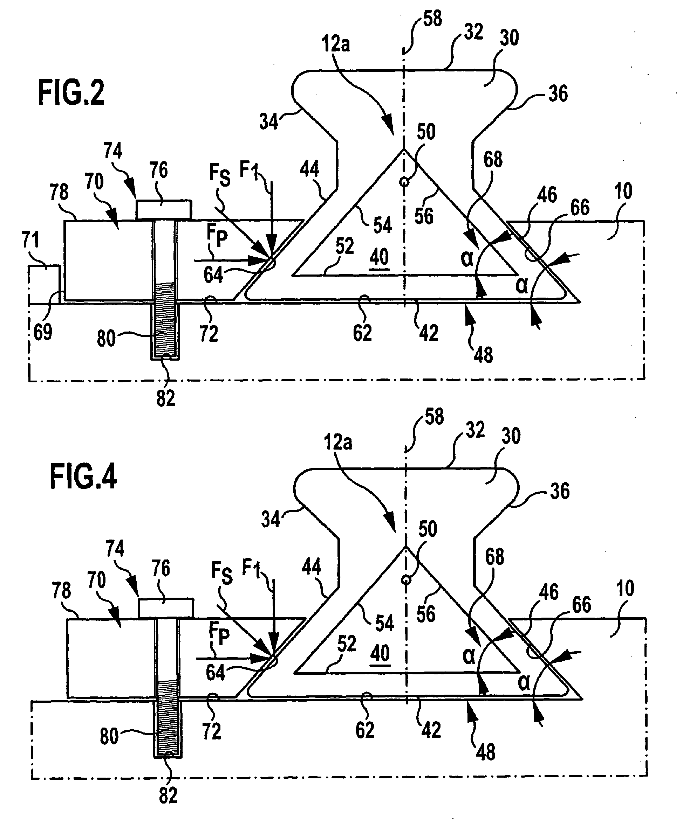

Wie in Fig. 2 am Beispiel der Führungsschiene 12a dargestellt, weist jede der Führungsschienen einen Führungsbereich 30 mit Führungsflächen 32, 34 und 36, sowie einen Fußbereich 40, der Montageflächen 42, 44 und 46 auf. Der Fußbereich 40 stellt bei dem ersten Ausführungsbeispiel einen Einsatzkörper 48 dar, wobei dessen Montageflächen 42, 44, 46 sich einerseits in Längsrichtung 50 der jeweiligen Führungsschiene, beispielsweise der Führungsschiene 12a erstrecken, und andererseits quer zur Längsrichtung 50 parallel zu den Schenkeln 52, 54 und 56 eines gleichschenkligen Dreiecks verlaufen, das in einer senkrecht zur Längsrichtung 50 verlaufenden und in Fig. 2 mit der Zeichenebene zusammenfallenden Querschnittsebene liegt und außerdem symmetrisch zu einer durch die Längsrichtung 50 hindurch verlaufenden Längsmittelebene 58 angeordnet ist.

Die Schenkel des Dreiecks 52, 54 und 56 können grundsätzlich beliebig verlaufen und stellen in diesem Zusammenhang lediglich mathematische Hilfslinien dar, welche die Ausrichtung der Montageflächen 42, 44 und 46 definieren.

Bei dem in Fig. 2 dargestellten nicht erfindungsgemäßen Ausführungsbeispiel stützt sich die Führungsschiene 12a mit der dem Führungsbereich 30 abgewandt liegenden Montagefläche 42 auf einer als Ausrichtfläche 62 wirksamen Gegenfläche am Grundkörper 10 ab.

Mindestens eine der weiteren Montageflächen 44 und 46 des Fußbereichs 40, beispielsweise die Montagefläche 46, ist einer weiteren, am Grundkörper 10 angeordneten Gegenfläche 66 zugewandt, die in diesem Fall als Ausrichtfläche wirksam ist, wobei die Ausrichtfläche 66 bei diesem Ausführungsbeispiel in einem spitzen Winkel α zur Ausrichtfläche 62 verläuft.

Damit bilden die beiden Ausrichtflächen 62, 66 eine Aufnahme 68 für den als Einsatzkörper 48 ausgebildeten Fußbereich 40 der Führungsschiene 12a.

Vorzugsweise erstrecken sich die Montageflächen 42, 44 und 46 der Führungsschiene 12a im wesentlichen über die gesamte Länge derselben.

Die Führungsschiene 12a ist nun dadurch relativ zum Grundkörper 10 exakt ausrichtbar, daß die Montagefläche 42 an der Ausrichtfläche 62 und die Montagefläche 46 an der Ausrichtfläche 66 anliegen und somit ist durch das Anbringen der Ausrichtflächen 62, 66, beispielsweise durch eine präzise spanabhebende Bearbeitung der Verlauf der Führungsschiene 12a relativ zum Grundkörper 10 vorgebbar.

Um eine stabile und definierte Ausrichtung der Führungsschiene 12a relativ zum Grundkörper 10 zu erhalten, wird die weder an der Ausrichtfläche 62 noch an der Ausrichtfläche 66 anliegende weitere Montagefläche 44 durch eine Druckfläche 64 eines als Ganzes mit 70 bezeichneten Spannelements beaufschlagt, wobei die Druckfläche 64 vorzugsweise parallel zur Montagefläche 44 ausgerichtet ist und auf diese mit einer senkrecht auf der Montagefläche 44 stehenden Spannkraft F1 einwirkt, die sich in eine Kraftkomponente FP und eine Kraftkomponente FS zerlegen läßt, wobei die Kraftkomponente FP parallel zur Ausrichtfläche 62 verläuft und die Führungsschiene 12a in Richtung der Ausrichtfläche 66 verschiebt und beaufschlagt, während die Kraftkomponente FS senkrecht zur Ausrichtfläche 62 verläuft und somit die Montagefläche 42 gegen die Ausrichtfläche 62 beaufschlagt.

Um mit der Spannkraft F1 wirken zu können, ist vorzugsweise das Spannelement 70 auf seiner der Druckfläche 64 gegenüberliegenden Rückseite 69 durch ein vom Grundkörper 10 abstehendes Stützelement 71 abgestützt.

Dadurch, daß die Ausrichtfläche 66 in gleicher Weise wie die Druckfläche 64 im Winkel α zur Ausrichtfläche 62 verläuft und ebenfalls dieser zugewandt angeordnet ist, entstehen an der Ausrichtfläche 66 als Reaktionskräfte dieselben Kraftkomponenten FP und FS wie an der Druckfläche 64 und wirken auf die Montagefläche 46 in gleicher Weise wie die Kraftkomponenten FP und FS, so daß einerseits der Fußbereich 40 der Führungsschiene 12a in Richtung der Ausrichtfläche 62 beaufschlagt ist und andererseits der Fußbereich 40 zwischen der Druckfläche 64 und der Ausrichtfläche 66 aufgrund der an jeder dieser auftretenden Kraftkomponente FP gegen eine Bewegung in Richtung der Ausrichtfläche 62 eingespannt gehalten ist.

Um sicherzustellen, daß sich an der Ausrichtfläche 66 dieselben Kraftkomponenten FP und FS einstellen, wie an der Druckfläche 64 ist die Montagefläche 42 als polierte Fläche ausgebildet und liegt gleitend auf der ebenfalls als polierten Fläche ausgebildeten Ausrichtfläche 62 auf und in gleicher Weise ist auch die Montagefläche 46 als polierte Fläche ausgebildet und liegt gleitend auf der ebenfalls poliert ausgebildeten Ausrichtfläche 66 auf.

Vorzugsweise ist auch noch die Montagefläche 44 als geschliffene Fläche ausgebildet und ebenfalls die Druckfläche 64.

Damit kann sich bei Beaufschlagung der Montagefläche 44 mittels des Spannelements 70 die Führungsschiene 12a derart quer zur Längsrichtung 50 bewegen, daß im Bereich der Ausrichtfläche 66 dieselben Kräfte auftreten, wie im Bereich der Druckfläche 64.

Um eine Druckbeaufschlagung der Montagefläche 44 durch die Druckfläche 64 zu erreichen, ist das Spannelement 70 in Richtung einer vorzugsweise zur Ausrichtfläche 62 parallel verlaufenden Grundfläche 72 bewegbar, die im günstigsten Fall mit der Ausrichtfläche 62 in einer Ebene liegt.

Hierzu dient im einfachsten Fall eine Schraube 74, welche mit ihrem Kopf 76 auf einer der Grundfläche 72 abgewandten Seite 78 des Spannelements 70 aufliegt, das Spannelement 70 durchsetzt und mit einem Gewindeabschnitt 80 in eine Gewindebohrung 82 einschraubbar ist, die sich ausgehend von der Grundfläche 72 in den Grundkörper 10 hineinerstreckt.

Dadurch läßt sich das gesamte Spannelement 70 in Richtung der Grundfläche 72 mit Kraft beaufschlagen und wirkt somit mit der Druckfläche 64 gegen die Montagefläche 44.

Es ist beispielsweise denkbar, in Längsrichtung 50 der Führungsschiene 12a eine Vielzahl von aufeinanderfolgenden Spannelementen 70 vorzusehen. Besonders günstig ist es jedoch, wenn das Spannelement 70 als durchgehende Leiste ausgebildet ist, die von in deren zur Längsrichtung 50 der Führungsschiene 12a parallelen Längsrichtung 75 in geeigneten, im einfachsten Fall regelmäßigen Abständen angeordneten Schrauben 76 in Richtung des Grundkörpers 10 vorspannbar ist, um mit der Druckfläche 64 eine Kraft F1 zu erzeugen, die - entweder größere Schwankungen aufweisen kann - bei einer Lösungsvariante aber auch in Richtung der Längsrichtung 50 der Führungsschiene 12a gesehen, maximal um 20% schwankt, vorzugsweise im wesentlichen über die Länge der Führungsschiene 12a ungefähr gleich groß ist.

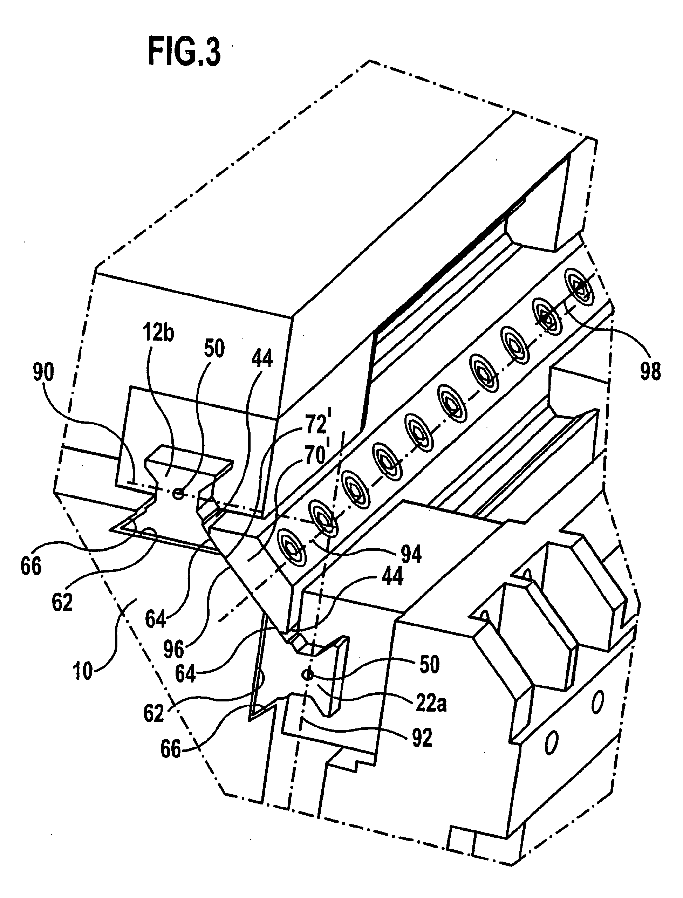

Wenn, wie in Fig. 1 dargestellt, die Führungsschienen 12a und 12b in einer ersten Führungsebene 90 liegen, während die Führungsschienen 22a und 22b in einer zweiten Führungsebene 92 liegen und die Führungsebenen 90 und 92 quer zueinander verlaufen, so läßt sich das erfindungsgemäße Konzept, wie in Fig. 3 nochmals vergrößert dargestellt, besonders vorteilhaft bei den nächstliegend zu einer Schnittlinie 94 der Führungsebenen 90 und 92 liegenden Führungsschienen 12b und 22a besonders günstig dadurch einsetzen, daß am Grundkörper 10 die Aufnahmen 68 mit den Ausrichtflächen 66 auf jeweils der Schnittlinie 94 abgewandten Seiten angeordnet sind, während die Ausrichtflächen 62 ungefähr parallel zur jeweiligen Führungsebene 90, 92 verlaufen und die Montageflächen 44 die von jeweils einer Druckfläche 64 beaufschlagt werden sollen, der Schnittlinie 94 zugewandt liegen.

Damit lassen sich die Druckfläche 64 für die Führungsschiene 12b und die Druckfläche 64 für die Führungsschiene 22a an einem gemeinsamen Spannelement 70' anordnen.

Vorzugsweise liegen dabei die Druckflächen 64 beiderseits einer Unterseite 96 des Spannelements 70', die einer für das Spannelement 70' vorgesehenen Grundfläche 72 am Grundkörper 10 zugewandt ist und mit in einer Längsrichtung 98 des Spannelements 70' aufeinanderfolgenden Schrauben 74 in Richtung der Grundfläche 72' beaufschlagt ist.

Bei einem zweiten Ausführungsbeispiel eines nicht erfindungsgemäßen Schlittensystems, dargestellt in Fig. 4, ist die Ausrichtfläche 66 ursprünglich als ballige Fläche ausgebildet, die allerdings bei Wirkung der Spannkraft F1 sich in Richtung einer ebenen Fläche verformt und sich im Idealfall bei voller Wirkung der Spannkraft F1 im wesentlichen vollflächig an die Montagefläche 46 anlegt.

Damit besteht die Möglichkeit, Deformationen des Materials durch Formung der Ausrichtflächen oder auch der Montageflächen derart zu berücksichtigen, daß diese dann unter Einwirkung der Spannkraft im wesentlichen vollflächig aneinander anliegen.

In gleicher Weise besteht auch die Möglichkeit, beispielsweise die Ausrichtfläche 62 geringfügig gewölbt, das heißt ballig auszuführen.

## Patentansprüche

1. Schlittensystem für Werkzeugmaschinen, umfassend einen Grundkörper (10), mindestens eine am Grundkörper (10) gehaltene Führungsschiene (12, 22), die sich in einer Längsrichtung (50) erstreckt, und einen mit mindestens einem Führungswagen (16, 26) an der Führungsschiene (12, 22) geführten Schlitten (14, 24), wobei die führungsschiene einen Führungsbereich (30) und einen Fußbereich (40) aufweist, wobei zur Verbindung zwischen dem Fußbereich (40) und dem Grundkörper (10) einer von beiden eine sich quer zu der Längsrichtung (50) der Führungsschiene erstreckende Aufnahme (68) und der andere einen in die Aufnahme (68) einsetzbaren Einsatzkörper (48) aufweist, welcher in Richtung quer zur Längsrichtung (50) der Führungsschiene (12, 22) in die Aufnahme (68) eingesetzt ist, ein Spannelement (70) welches den Einsatzkörper (48) im Sinne eines festen Sitzes in der Aufnahme (68) beaufschlagt, wobei der Einsatzkörper (48) durch die Aufnahme (68) und das Spannelement (70) in allen quer zur Längsrichtung (50) verlaufenden Richtungen formschlüssig fixiert ist,
**dadurch gekennzeichnet, dass** das Spannelement (70') auf einander gegenüberliegenden Längsseiten mit Druckflächen (64) zum Beaufschlagen jeweils eines Einsatzkörpers (48) versehen ist

2. Schlittensystem nach Anspruch 1, **dadurch gekennzeichnet, dass** die Aufnahme (68) mindestens eine Ausrichtfläche (62,66) aufweist, an welcher eine zugeordnete Montagefläche (42, 46) des Einsatzkörpers (48) anliegt.

3. Schlittensystem nach Anspruch 2, **dadurch gekennzeichnet, dass** die Aufnahme (68) zwei Ausrichtflächen (62, 66) aufweist, an welchen jeweils eine zugeordnete Montagefläche (42, 46) des Einsatzkörpers (48) anliegt.

4. Schlittensystem nach Anspruch 3, **dadurch gekennzeichnet, dass** in der Aufnahme (68) die zwei Ausrichtflächen (62, 66) einander zugewandt angeordnet sind.

5. Schlittensystem nach einem der Ansprüche 2 bis 4, **dadurch gekennzeichnet, dass** die Ausrichtfläche (62, 66) und die zugeordnete Montagefläche (42, 46) des Einsatzkörpers (48) eine Flächenpaarung (62, 42; 66, 46) bilden und dass mindestens eine Fläche der Flächenpaarung (62, 42; 66, 46) als ebene Fläche ausgebildet ist.

6. Schlittensystem nach Anspruch 5, **dadurch gekennzeichnet, dass** jede Ausrichtfläche (62, 66) und die zugeordnete Montagefläche (42, 46) des Einsatzkörpers (48) eine Flächenpaarung (62, 42; 66, 46) bilden und dass mindestens eine Fläche jeder Flächenpaarung (62, 42; 66, 46) als ebene Fläche ausgebildet ist.

7. Schlittensystem nach Anspruch 5 oder 6, **dadurch gekennzeichnet, dass** beide Flächen einer Flächenpaarung (62, 42; 66, 46) als ebene Flächen ausgebildet sind.

8. Schlittensystem nach einem der voranstehenden Ansprüche, **dadurch gekennzeichnet, dass** eine der Ausrichtflächen (62, 66) als leicht gekrümmte Fläche ausgebildet ist.

9. Schlittensystem nach einem der Ansprüche 5 bis 8, **dadurch gekennzeichnet, dass** die Flächen unterschiedlicher Flächenpaarungen (62, 42; 66, 46) in einem Winkel (α) von weniger als 90° zueinander verlaufen.

10. Schlittensystem nach Anspruch 7, **dadurch gekennzeichnet, dass** die ebenen Flächen der unterschiedlichen Flächenpaarungen (62, 42; 66, 46) in einem Winkel (α) zueinander verlaufen, der größer ist als ein Grenzwinkel der Selbsthemmung.

11. Schlittensystem nach Anspruch 9 oder 10, **dadurch gekennzeichnet, dass** die Flächen unterschiedlicher Flächenpaarungen (62, 42; 66, 46) in einem Winkel (α) im Bereich zwischen 30° und 60° zueinander verlaufen.

12. Schlittensystem nach einem der voranstehenden Ansprüche, **dadurch gekennzeichnet, dass** die Flächenpaarungen (62, 42; 66, 46) durch relativ zueinander gleitende Flächen gebildet sind.

13. Schlittensystem nach Anspruch 12, **dadurch gekennzeichnet, dass** die Flächenpaarungen (62, 42; 66, 46) jeweils durch geschliffene Flächen gebildet sind.

14. Schlittensystem nach einem der voranstehenden Ansprüche, **dadurch gekennzeichnet, dass** der Fußbereich (40) symmetrisch zu einer Längsmittelebene (58) der Führungsschienen (12, 22) ausgebildet ist.

15. Schlittensystem nach einem der voranstehenden Ansprüche, **dadurch gekennzeichnet, dass** der Führungsbereich (30) symmetrisch zur Längsmittelebene (58) der Führungsschienen (12, 22) ausgebildet ist.

16. Schlittensystem nach einem der voranstehenden Ansprüche, **dadurch gekennzeichnet, dass** der Fußbereich (40) und der Führungsbereich (30) der Führungsschienen (12, 22) Teil einer einstückigen, sich in der Längsrichtung (50) erstreckenden Profilschiene sind.

17. Schlittensystem nach Anspruch 16, **dadurch gekennzeichnet, dass** die Profilschiene in der Längsrichtung (50) eine im wesentlichen konstante Querschnittsform aufweist.

18. Schlittensystem nach einem der voranstehenden Ansprüche, **dadurch gekennzeichnet, dass** das Spannelement (70) ständig mit Spannkräften (F1) auf den Einsatzkörper einwirkt.

19. Schlittensystem nach einem der voranstehenden Ansprüche, **dadurch gekennzeichnet, dass** mindestens ein Spannelement (70) über die Länge der Führungsschiene (12, 22) vielfach mit der Spannkraft (F1) auf den Einsatzkörper (48) einwirkt.

20. Schlittensystem nach Anspruch 18 oder 19, **dadurch gekennzeichnet, dass** mit dem Spannelement (70) auf den Einsatzkörper (48) wirkende Spannkräfte (F1) einstellbar sind.

21. Schlittensystem nach Anspruch 20, **dadurch gekennzeichnet, dass** die Spannkräfte (F1) lokal einstellbar sind.

22. Schlittensystem nach einem der voranstehenden Ansprüche, **dadurch gekennzeichnet, dass** die Spannelemente (70) durchdringungsfrei zur Führungsschiene (12, 22) angeordnet sind.

23. Schlittensystem nach einem der voranstehenden Ansprüche, **dadurch gekennzeichnet, dass** das Spannelement (70) von einer der Aufnahme (60) gegenüberliegenden Seite auf den Einsatzkörper (48) einwirkt.

24. Schlittensystem nach einem der voranstehenden Ansprüche, **dadurch gekennzeichnet, dass** das Spannelement (70) direkt auf den Einsatzkörper (48) einwirkt.

25. Schlittensystem nach Anspruch 24, **dadurch gekennzeichnet, dass** das Spannelement (70) flächig an dem Einsatzkörper (48) anliegt.

26. Schlittenystem nach einem der voranstehenden Ansprüche, **dadurch gekennzeichnet, dass** das Spannelement (70) als Spannleiste ausgebildet ist.

27. Schlittensystem nach einem der voranstehenden Ansprüche, **dadurch gekennzeichnet, dass** das Spannelement (70) auf das zu beaufschlagende Teil (48) mittels mindestens einer Druckfläche (64) einwirkt.

28. Schlittensystem nach Anspruch 27, **dadurch gekennzeichnet, dass** sich die Druckfläche (64) über die Ausdehnung des Spannelements (70) in seiner Längsrichtung (75) erstreckt.

29. Schlittensystem nach einem der voranstehenden Ansprüche, **dadurch gekennzeichnet, dass** die Druckflächen (64) ein und desselben Spannelements (70') Einsatzkörper (48) unterschiedlicher, benachbarter Führungsschienen (12b, 22a) beaufschlagen.

30. Schlittensystem nach einem der voranstehenden Ansprüche, **dadurch gekennzeichnet, dass** der Fußbereich (40) der Führungsschiene (12, 22) als Einsatzkörper (48) ausgebildet ist und der Grundkörper (10) die Aufnahme (68) aufweist.

31. Schlittensystem nach Anspruch 30, **dadurch gekennzeichnet, dass** der Fußbereich (40) mindestens drei sich parallel zur Längsrichtung (50) der Führungsschiene (12, 22) erstreckende Montageflächen (42, 44, 46) aufweist, von denen jede sich in Richtung quer zur Längsrichtung (50) parallel zu jeweils einem anderen Schenkel (52, 54, 56) eines in einer quer zur Längsrichtung (50) verlaufenden Ebene liegenden Dreiecks erstreckt.

32. Schlittensystem nach Anspruch 31, **dadurch gekennzeichnet, dass** eine der Montageflächen (42, 44, 46) auf einer dem Führungsbereich (30) gegenüberliegenden Seite des Fußbereichs (40) verläuft.

33. Schlittensystem nach Anspruch 32, **dadurch gekennzeichnet, dass** weitere Montageflächen (44, 46) an dem Fußbereich (40) so angeordnet sind, dass sie auf unterschiedlichen Seiten der dem Führungsbereich (30) gegenüberliegenden Montagefläche (42) verlaufen.

34. Schlittensystem nach einem der Ansprüche 31 bis 33 **dadurch gekennzeichnet, dass** das die Lage der Montageflächen (42, 44, 46) quer zur Längsrichtung (50) definierende Dreieck (52, 54, 56) ein gleichschenkliges Dreieck ist.

## Claims

1. Carriage system for machine tools, comprising a base member (10), at least one guide rail (12, 22) held on the base member (10) and extending in a longitudinal direction (50) and a carriage (14, 24) guided on the guide rail (12, 22) with at least one guide carriage (16, 26), wherein the guide rail has a guiding area (30) and a base area (40), wherein for the connection between the base area (40) and the base member (10) one of the two has a receptacle (68) extending transversely to the longitudinal direction (50) of the guide rail and the other has an insert member (48) insertable into the receptacle (68), said insert member being inserted into the receptacle (68) in a direction transverse to the longitudinal direction (50) of the guide rail (12, 22), a clamping element (70) acting on the insert member (48) in the sense of a secure fit in the receptacle (68), wherein the insert member (48) is fixed in a form-locking manner by the receptacle (68) and the clamping element (70) in all directions extending transversely to the longitudinal direction (50),
**characterized in that** the clamping element (70') is provided with pressure surfaces (64) on oppositely located longitudinal sides for acting upon a respective insert member (48).

2. Carriage system as defined in claim 1, **characterized in that** the receptacle (68) has at least one aligning surface (62, 66), an associated mounting surface (42, 46) of the insert member (48) abutting on said aligning surface.

3. Carriage system as defined in claim 2, **characterized in that** the receptacle (68) has two aligning surfaces (62, 66), an associated mounting surface (42, 46) of the insert member (48) abutting on each of said surfaces.

4. Carriage system as defined in claim 3, **characterized in that** the two aligning surfaces (62, 66) are arranged in the receptacle (68) so as to face one another.

5. Carriage system as defined in any one of claims 2 to 4, **characterized in that** the aligning surface (62, 66) and the associated mounting surface (42, 46) of the insert member (48) form a pair of surfaces (62, 42; 66, 46) and that at least one surface of the pair of surfaces (62, 42; 66, 46) is designed as a flat surface.

6. Carriage system as defined in claim 5, **characterized in that** each aligning surface (62, 66) and the associated mounting surface (42, 46) of the insert member (48) form a pair of surfaces (62, 42; 66, 46) and that at least one surface of each pair of surfaces (62, 42; 66, 46) is designed as a flat surface.

7. Carriage system as defined in claim 5 or 6, **characterized in that** both surfaces of a pair of surfaces (62, 42; 66, 46) are designed as flat surfaces.

8. Carriage system as defined in any one of the preceding claims, **characterized in that** one of the aligning surfaces (62, 66) is designed as a slightly curved surface.

9. Carriage system as defined in any one of claims 5 to 8, **characterized in that** the surfaces of different pairs of surfaces (62, 42; 66, 46) extend at an angle (α) of less than 90° relative to one another.

10. Carriage system as defined in claim 7, **characterized in that** the flat surfaces of the different pairs of surfaces (62, 42; 66, 46) extend relative to one another at an angle (α) greater than a critical angle of self-locking.

11. Carriage system as defined in claim 9 or 10, **characterized in that** the surfaces of different pairs of surfaces (62, 42; 66, 46) extend at an angle (α) in the range of between 30° and 60° relative to one another.

12. Carriage system as defined in any one of the preceding claims, **characterized in that** the pairs of surfaces (62, 42; 66, 46) are formed by surfaces sliding relative to one another.

13. Carriage system as defined in claim 12, **characterized in that** the pairs of surfaces (62, 42; 66, 46) are each formed by ground surfaces.

14. Carriage system as defined in any one of the preceding claims, **characterized in that** the base area (40) is designed so as to be symmetric to a longitudinal central plane (58) of the guide rails (12, 22).

15. Carriage system as defined in any one of the preceding claims, **characterized in that** the guiding area (30) is designed so as to be symmetric to the longitudinal central plane (58) of the guide rails (12, 22).

16. Carriage system as defined in any one of the preceding claims, **characterized in that** the base area (40) and the guiding area (30) of the guide rails (12, 22) are part of an integral profiled rail extending in the longitudinal direction (50).

17. Carriage system as defined in claim 16, **characterized in that** the profiled rail has an essentially constant cross-sectional shape in the longitudinal direction (50).

18. Carriage system as defined in any one of the preceding claims, **characterized in that** the clamping element (70) constantly acts on the insert member with clamping forces (F1).

19. Carriage system as defined in any one of the preceding claims, **characterized in that** at least one clamping element (70) acts on the insert member (48) with the clamping force (F1) in a multiple manner over the length of the guide rail (12, 22).

20. Carriage system as defined in claim 18 or 19, **characterized in that** clamping forces (F1) acting on the insert member (48) with the clamping element (70) are adjustable.

21. Carriage system as defined in claim 20, **characterized in that** the clamping forces (F1) are adjustable locally.

22. Carriage system as defined in any one of the preceding claims, **characterized in that** the clamping elements (70) are arranged so as be free of penetration in relation to the guide rail (12, 22).

23. Carriage system as defined in any one of the preceding claims, **characterized in that** the clamping element (70) acts on the insert member (48) from a side located opposite the receptacle (60).

24. Carriage system as defined in any one of the preceding claims, **characterized in that** the clamping element (70) acts directly on the insert member (48).

25. Carriage system as defined in claim 24, **characterized in that** the clamping element (70) abuts areally on the insert member (48).

26. Carriage system as defined in any one of the preceding claims, **characterized in that** the clamping element (70) is designed as a clamping bar.

27. Carriage system as defined in any one of the preceding claims, **characterized in that** the clamping element (70) acts on the part (48) to be acted upon by means of at least one pressure surface (64).

28. Carriage system as defined in claim 27, **characterized in that** the pressure surface (64) extends over the extension of the clamping element (70) in its longitudinal direction (75).

29. Carriage system as defined in any one of the preceding claims, **characterized in that** the pressure surfaces (64) of one and the same clamping element (70') act upon insert members (48) of different, adjacent guide rails (12b, 22a).

30. Carriage system as defined in any one of the preceding claims, **characterized in that** the base area (40) of the guide rail (12, 22) is designed as an insert member (48) and the base member (10) has the receptacle (68).

31. Carriage system as defined in claim 30, **characterized in that** the base area (40) has at least three mounting surfaces (42, 44, 46) extending parallel to the longitudinal direction (50) of the guide rail (12, 22), each of said mounting surfaces extending in a direction transverse to the longitudinal direction (50) parallel to a different, respective side (52, 54, 56) of a triangle located in a plane extending transversely to the longitudinal direction (50).

32. Carriage system as defined in claim 31, **characterized in that** one of the mounting surfaces (42, 44, 46) extends on a side of the base area (40) located opposite the guiding area (30).

33. Carriage system as defined in claim 32, **characterized in that** additional mounting surfaces (44, 46) are arranged on the base area (40) such that they extend on different sides of the mounting surface (42) located opposite the guiding area (30).

34. Carriage system as defined in any one of claims 31 to 33, **characterized in that** the triangle (52, 54, 56) defining the position of the mounting surfaces (42, 44, 46) transversely to the longitudinal direction (50) is an isosceles triangle.

## Revendications

1. Système de chariot pour machines-outils, comprenant un corps de base (10), au moins un rail de guidage (12, 22) maintenu sur le corps de base (10) qui s'étend dans un sens longitudinal (50), et un chariot (14, 24) guidé avec au moins un chariot de guidage (16, 26) sur le rail de guidage (12, 22), le rail de guidage présentant une zone de guidage (30) et une zone de pied (40), pour la liaison entre la zone de pied (40) et le corps de base (10) l'un des deux présentant un logement (68) s'étendant transversalement au sens longitudinal (50) du rail de guidage et l'autre présentant un corps d'insertion (48) pouvant être inséré dans le logement (68), lequel est inséré en direction transversale au sens longitudinal (50) du rail de guidage (12, 22) dans le logement (68), un élément de serrage (70) qui sollicite le corps d'insertion (48) au sens d'un siège fixe dans le logement (68), le corps d'insertion (48) étant fixé par complémentarité de forme par le logement (68) et l'élément de serrage (70) dans tous les sens s'étendant transversalement au sens longitudinal (50), **caractérisé en ce que** l'élément de serrage (70') est pourvu sur des côtés longitudinaux opposés de surfaces de pression (64) pour la sollicitation respectivement d'un corps d'insertion (48).

2. Système de chariot selon la revendication 1, **caractérisé en ce que** le logement (68) présente au moins une surface de départ (62, 66), sur laquelle repose une surface de montage associée (42, 46) du corps d'insertion (48).

3. Système de chariot selon la revendication 2, **caractérisé en ce que** le logement (68) présente deux surfaces de départ (62, 66), sur lesquelles repose respectivement une surface de montage (42, 46) associée du corps d'insertion (48).

4. Système de chariot selon la revendication 3, **caractérisé en ce que** les deux surfaces de départ (62, 66) sont disposées tournées l'une vers l'autre dans le logement (68).

5. Système de chariot selon l'une quelconque des revendications 2 à 4, **caractérisé en ce que** la surface de départ (62, 66) et la surface de montage (42, 46) associée du corps d'insertion (48) forment un appariement de surfaces (62, 42 ; 66, 46) et **en ce qu'**au moins une surface de l'appariement de surfaces (62, 42 ; 66, 46) est réalisée comme une surface plane.

6. Système de chariot selon la revendication 5, **caractérisé en ce que** chaque surface de départ (62, 66) et la surface de montage (42, 46) associée du corps d'insertion (48) forment un appariement de surfaces (62, 42 ; 66, 46) et **en ce qu'**au moins une surface de chaque appariement de surfaces (62, 42 ; 66, 46) est réalisée comme une surface plane.

7. Système de chariot selon la revendication 5 ou 6, **caractérisé en ce que** les deux surfaces d'un appariement de surfaces (62, 42 ; 66, 46) sont réalisées comme des surfaces planes.

8. Système de chariot selon l'une quelconque des revendications précédentes, **caractérisé en ce que** l'une des surfaces de départ (62, 66) est réalisée comme une surface légèrement cintrée.

9. Système de chariot selon l'une quelconque des revendications 5 à 8, **caractérisé en ce que** les surfaces d'appariements de surfaces différents (62, 42 ; 66, 46) s'étendent l'une vers l'autre dans un angle (α) inférieur à 90 °.

10. Système de chariot selon la revendication 7, **caractérisé en ce que** les surfaces planes des appariements de surfaces différents (62, 42 ; 66, 46) s'étendent l'une vers l'autre dans un angle (α) qui est supérieur à un angle limite d'auto-blocage.

11. Système de chariot selon la revendication 9 ou 10, **caractérisé en ce que** les surfaces d'appariements de surfaces différents (62, 42 ; 66, 46) s'étendent l'une vers l'autre dans un angle (α) compris dans la plage entre 30 et 60°.

12. Système de chariot selon l'une quelconque des revendications précédentes, **caractérisé en ce que** les appariements de surfaces (62, 42 ; 66, 46) sont formés par des surfaces glissant les unes par rapport aux autres.

13. Système de chariot selon la revendication 12, **caractérisé en ce que** les appariements de surfaces (62, 42 ; 66, 46) sont formés respectivement par des surfaces rectifiées .

14. Système de chariot selon l'une quelconque des revendications précédentes, **caractérisé en ce que** la zone de pied (40) est réalisée de manière symétrique à un plan médian longitudinal (58) des rails de guidage (12, 22).

15. Système de chariot selon l'une quelconque des revendications précédentes, **caractérisé en ce que** la zone de guidage (30) est réalisée de manière symétrique au plan médian longitudinal (58) des rails de guidage (12, 22).

16. Système de chariot selon l'une quelconque des revendications précédentes, **caractérisé en ce que** la zone de pied (40) et la zone de guidage (30) des rails de guidage (12, 22) font partie d'un rail profilé d'un seul tenant, s'étendant dans le sens longitudinal (50).

17. Système de chariot selon la revendication 16, **caractérisé en ce que** le rail profilé dans le sens longitudinal (50) présente une forme de section transversale essentiellement constante.

18. Système de chariot selon l'une quelconque des revendications précédentes, **caractérisé en ce que** l'élément de serrage (70) agit en permanence avec des forces de serrage (F1) sur le corps d'insertion.

19. Système de chariot selon l'une quelconque des revendications précédentes, **caractérisé en ce qu'**au moins un élément de serrage (70) agit sur la longueur du rail de guidage (12, 22) plusieurs fois avec la force de serrage (F1) sur le corps d'insertion (48).

20. Système de chariot selon la revendication 18 ou 19, **caractérisé en ce que** des forces de serrage (F1) agissant avec l'élément de serrage (70) sur le corps d'insertion (48) peuvent être réglées.

21. Système de chariot selon la revendication 20, **caractérisé en ce que** les forces de serrage (F1) peuvent être réglées localement.

22. Système de chariot selon l'une quelconque des revendications précédentes, **caractérisé en ce que** les éléments de serrage (70) sont disposés sans pénétration par rapport au rail de guidage (12, 22).

23. Système de chariot selon l'une quelconque des revendications précédentes, **caractérisé en ce que** l'élément de serrage (70) agit d'un côté opposé au logement (60) sur le corps d'insertion (48).

24. Système de chariot selon l'une quelconque des revendications précédentes, **caractérisé en ce que** l'élément de serrage (70) agit directement sur le corps d'insertion (48).

25. Système de chariot selon la revendication 24, **caractérisé en ce que** l'élément de serrage (70) repose à plat sur le corps d'insertion (48).

26. Système de chariot selon l'une quelconque des revendications précédentes, **caractérisé en ce que** l'élément de serrage (70) est réalisé comme une barre de tension.

27. Système de chariot selon l'une quelconque des revendications précédentes, **caractérisé en ce que** l'élément de serrage (70) agit sur la partie à solliciter (48) au moyen d'au moins une surface de pression (64).

28. Système de chariot selon la revendication 27, **caractérisé en ce que** la surface de pression (64) s'étend sur le développement de l'élément de serrage (70) dans son sens longitudinal (75).

29. Système de chariot selon l'une quelconque des revendications précédentes, **caractérisé en ce que** les surfaces de pression (64) d'un seul et même élément de serrage (70') sollicitent des corps d'insertion (48) de différents rails de guidage (12b, 22a) contigus.

30. Système de chariot selon l'une quelconque des revendications précédentes, **caractérisé en ce que** la zone de pied (40) du rail de guidage (12, 22) est réalisée comme un corps d'insertion (48) et le corps de base (10) présente le logement (68).

31. Système de chariot selon la revendication 30, **caractérisé en ce que** la zone de pied (40) présente au moins trois surfaces de montage (42, 44, 46) s'étendant parallèlement au sens longitudinal (50) du rail de guidage (12, 22), dont chacune s'étend en direction transversale au sens longitudinal (50) parallèlement à respectivement un autre côté (52, 54, 56) d'un triangle se trouvant dans un plan s'étendant transversalement au sens longitudinal (50).

32. Système de chariot selon la revendication 31, **caractérisé en ce que** l'une des surfaces de montage (42, 44, 46) s'étend sur un côté opposé à la zone de guidage (30) de la zone de pied (40).

33. Système de chariot selon la revendication 32, **caractérisé en ce que** d'autres surfaces de montage (44, 46) sont disposées sur la zone de pied (40) de sorte qu'elles s'étendent sur différents côtés de la surface de montage (42) opposée à la zone de guidage (30).

34. Système de chariot selon l'une quelconque des revendications 31 à 33, **caractérisé en ce que** le triangle (52, 54, 56) définissant la position des surfaces de montage (42, 44, 46) transversalement au sens longitudinal (50) est un triangle isocèle.
